# EUROPÄISCHE PATENTSCHRIFT

(11) **EP 2 463 101 B1**
(45) Veröffentlichungstag und Bekanntmachung des Hinweises auf die Patenterteilung: **17.07.2013**
(21) Anmeldenummer: 11190259.9
(22) Anmeldetag: 23.11.2011
(51) Int. Cl.: B41F 33/00, G06F 3/12

(54) **System und Verfahren zur Erzeugung und Inspektion von Drucken mit statischen und variablen Inhalten**
System and method for creating and inspecting prints with static and variable content
Système et procédé de production et d'inspection d'impressions dotés de contenus statiques et variables

(30) Priorität: 13.12.2010 DE 102010054344
(43) Veröffentlichungstag der Anmeldung: 13.06.2012
(73) Patentinhaber: Heidelberger Druckmaschinen AG, 69115 Heidelberg (DE)
(72) Erfinder: Gieß, Berthold, 24340 Eckernförde (DE)

(56) Entgegenhaltungen:
- DE-A1-102005 009 406
- US-A1- 2004 107 855

## Beschreibung

Die vorliegende Erfindung betrifft ein Verfahren mit den Merkmalen von Anspruch 1.

Es sind bereits Druckinspektionssysteme bekannt, bei denen zunächst ein Vergleichsmuster eingelernt werden muss, indem ein gedruckter und visuell (vom Benutzer) für gut befundener Druck mit der Kamera aufgenommen und für spätere Inspektionsvorgänge als Vergleichsmuster hinterlegt wird. Die nachfolgenden Drucke werden dann lediglich gegen das Vergleichsmuster verglichen (Bildvergleich). Damit lassen sich aber keine variablen Drucke überprüfen. Solche Inspektionssysteme sind daher nur für das überprüfen statischer, d.h. von Druck zu Druck unveränderlicher Inhalte einsetzbar.

Die DE 10 2005 019 533 A1 beschreibt eine Druckmaschine und ein Verfahren zur Inline-Herstellung individualisierter Druckerzeugnisse. Dabei kommen eine Inline-Druckeinrichtung und eine Inline-Inspektionseinrichtung zur Fehlererkennung zum Einsatz. Fehlerhafte Druckbilder sollen unmittelbar nach dem Druck erkannt und einem zugrundeliegenden variablen Druckbild-Datensatz zugeordnet werden. Solche fehlerhafte Druckbilder sollen z.B. markiert und ausgeschleust werden.

Aus der DE 10 2006 012 513 A1 ist ein Bildverarbeitungssystem für eine Druckmaschine bekannt, das geeignet ist, statische und variable Bilddaten zu inspizieren. Variable Inhalte können z.B. unter Einsatz so genannter OCR-Techniken analysiert werden. Es ist dabei beschrieben, dass eine Auswerteeinheit zur Zeichenerkennung aus einem variablen Teilbild eines Druckprodukts mit einem Datenspeicher zur Generierung der Daten des variablen Teilbildes verbunden ist und dass die Daten der Auswerteeinheit mit einem Datensatz abgeglichen werden, der zur Ansteuerung eines variablen Druckers für den Druck des inspizierten Teilbildes verwendet wurde.

Aus der Offenlegungsschrift DE 10 2005 009 406 A1 geht ein Verfahren zur Steuerung bzw. Regelung eines Prozesses zur Herstellung von Druckerzeugnissen hervor, welches neben Druckwerken zum Aufbringen unveränderlicher Druckbilder eine zusätzliche nachgeschaltete Druckeinrichtung verwendet, um Steuerungsdaten auf einen Bedruckstoff aufzubringen. Diese Steuerungsdaten können dann anschließend noch in der Druckmaschine oder in einer separaten Maschine zur Druckweiterverarbeitung mittels einer Leseeinrichtung erfasst werden und zur Steuerung einer nachgeordneten Einrichtung verwendet werden.

Dokument DE-A-10 2005 009 406 offenbart somit ein Verfahren zur Erzeugung und Inspektion von Drucken mit statischen Inhalten durch die Druckwerke 11-14 und variablen Inhalten durch das Druckwerk 15, wobei
- eine Druckeinheit (11-15), eine Inspektionseinheit (16) und eine Recheneinheit (18) bereitgestellt werden,
- die Recheneinheit druckspezifische Informationen mit statischen und variablen Inhalten in Form von Druckparametern in eine Datei integriert und an die Druckeinheit leitet
- die Druckeinheit unter Verwendung der Druckparameter Drucke (16) erstellt und die Inspektionseinheit die Drucke inspiziert.

Das Dokument US 2004/0107855 A1 betrifft ein Verfahren zur Steuerung eines Druckers, welcher an einen Computer oder ein Netzwerk angeschlossen ist. Zur Behandlung des Druckauftrags wird ein Jobticket verwendet, welches den Inhalt der zu druckenden Seiten sowie weitere Eigenschaften der zu druckenden Seiten enthält. Dabei sind die zu druckenden Daten hierarchisch strukturiert, wobei die einzustellenden Daten in höheren und niedrigeren Ebenen der hierarchischen Struktur eingestellt werden können. Mit den Daten des Druckjobs wird dann ein Computerdrucker angesteuert, welcher den Druckjob abarbeitet.

Vor diesem Hintergrund ist es Aufgabe der vorliegenden Erfindung, ein gegenüber dem Stand der Technik verbessertes Verfahren mit einem einfachen Informationsmanagement zu schaffen.

Diese Aufgabe wird erfindungsgemäß durch ein Verfahren mit den Merkmalen von Anspruch 1 gelöst. Vorteilhafte Weiterbildungen der Erfindung ergeben sich aus den zugehörigen Unteransprüchen sowie aus der Beschreibung und den zugehörigen Zeichnungen.

Ein erfindungsgemäßes Verfahren zur Erzeugung und Inspektion von Drucken mit statischen und variablen Inhalten, verwendet ein System, wobei das System eine Druckeinheit, eine Inspektionseinheit und eine Recheneinheit umfasst, die Recheneinheit druckspezifische Informationen mit statischen und variablen Inhalten in Form von Druckparametern und Inspektionsparametern in ein gemeinsames JobTicket integriert und das JobTicket i) sowohl an die Druckeinheit als auch an die Inspektionseinheit leitet oder ii) zunächst an die Druckeinheit und von der Druckeinheit an die Inspektionseinheit leitet oder umgekehrt, die Druckparameter aus dem gemeinsamen Jobticket extrahiert werden, die Druckeinheit unter Verwendung der extrahierten Druckparameter Drucke erstellt, die Inspektionsparameter aus dem gemeinsamen Jobticket extrahiert werden, die Inspektionseinheit unter Verwendung der extrahierten Inspektionsparameter die Drucke inspiziert.

Gemäß einem Ausführungsbeispiel kann vorgesehen sein, dass die Inspektionsparameter aus dem gemeinsamen Jobticket unter Einsatz eines Filters extrahiert werden. Der Filter (als Software) kann dabei so programmiert sein, dass er aus dem Jobticket die relevanten Inspektionsparameter ausliest. Sofern die Inspektionsparameter im Jobticket separat vorgesehen sind, braucht der Filter nur das Jobticket an der betreffenden Stelle auszulesen. Sofern die Inspektionsparameter nicht separat vorgesehen sind, sondern z.B. als Teil, insbesondere Teilmenge der Druckparameter vorgesehen sind, muss der Filter Informationen nutzen, die festlegen, welche Druckparameter ergänzend auch als Inspektionsparameter verwendet werden sollen. Solche Informationen können im Filter selbst vorgesehen sein, aber auch im Jobticket abgespeichert sein.

Gemäß einem weiteren Ausführungsbeispiel kann vorgesehen sein, dass die Inspektionsparameter einer Warteschlange zugeführt werden.

Ein erfindungsgemäßes Verfahren zur Erzeugung und Inspektion von Drucken mit statischen und variablen Inhalten, ist ein Verfahren, wobei das Verfahren eine Druckeinheit, eine Inspektionseinheit und eine Recheneinheit umfasst, die Recheneinheit druckspezifische Informationen mit statischen und variablen Inhalten in Form von Druckparametern und Inspektionsparametern in ein gemeinsames JobTicket integriert und das JobTicket i) sowohl an die Druckeinheit als auch an die Inspektionseinheit leitet oder ii) zunächst an die Druckeinheit und von der Druckeinheit an die Inspektionseinheit leitet oder umgekehrt, die Druckparameter aus dem gemeinsamen Jobticket extrahiert werden, die Druckeinheit unter Verwendung der extrahierten Druckparameter Drucke erstellt, die Inspektionsparameter aus dem gemeinsamen Jobticket extrahiert werden, die Inspektionseinheit unter Verwendung der extrahierten Inspektionsparameter die Drucke inspiziert.

Gemäß einem Ausführungsbeispiel kann vorgesehen sein, dass die Inspektionsparameter aus dem gemeinsamen Jobticket unter Einsatz eines Filters extrahiert werden.

Gemäß einem weiteren Ausführungsbeispiel kann vorgesehen sein, dass die Inspektionsparameter einer Warteschlange zugeführt werden.

Die Inspektionsparameter (sowohl im System als auch im Verfahren) können im JobTicket separat zu den Druckparametern vorgesehen sein. Sie können im JobTicket aber auch nicht separat zu den Druckparametren vorgesehen sein und z.B. eine Teilmenge der Druckparameter bilden.

Kern der Erfindung ist die softwaremäßige Integration von Drucksystem und Inspektionssystem in einen Workflow und in ein Steuerungssystem einer Druckmaschine mit dem Ziel vollvariable Druckinhalte während des Drucks eines Auftrags überprüfen zu können. Ein zentrales Element ist dabei die Speicherung von Drucklayout, Inhalten und Inspektionsparameter in einem gemeinsamen Datensatz (JobTicket,) und die Gewinnung der jeweils relevanten Informationen für das Druck- und das Inspektionssystem aus dem JobTicket und somit aus derselben Datenquelle. Dieser Prozess läuft automatisch, inline und in Echtzeit ab, d.h. es erfolgt eine Kontrolle aller erstellten Drucke, auch solcher mit variablem Inhalt. Im Extremfall kann jede Druckinstanz, d.h. jeder einzelne Druck, unterschiedlich sein.

Die Inspektion des Druckbildes gemäß der Erfindung erfordert in vorteilhafter Weise keine manuellen Einrichtprozeduren. Es können erfindungsgemäß zudem beliebige und beliebig viele variable und statische Druckobjekte in vorteilhafter Weise inspiziert werden. Das erfindungsgemäße Inspektionssystem arbeitet auch in vorteilhafter Weise bei Auflage eins, d.h. beim Drucken eines einzelnen Druckes, weil kein Gutmuster eingelernt werden muss

Die Erfindung als solche sowie konstruktiv und/oder funktionell vorteilhafte Weiterbildungen der Erfindung werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen.

Die Zeichnungen zeigen:
- Fig. 1: Eine schematische Darstellung eines bevorzugten Ausführungsbeispiels eines erfindungsgemäßen Systems; und
- Fig. 2: Eine weitere schematische Darstellung eines bevorzugten Ausführungsbeispiels eines erfindungsgemäßen Verfahrens.

### Figur 1:

Das erfindungsgemäße System weist als Komponenten eine Druckeinheit (9), eine Inspektionseinheit (10) und eine Recheneinheit (3) auf.

Alle für das Druck- und Inspektionssystem relevanten Informationen werden über den JobEditor (1) eingegeben und als JobTicket (2) gespeichert. Der JobEditor (1), bzw. eine entsprechende Software auf einem Rechner, erstellt das Layout und die Inhalte für den Druck und definiert die globalen und objektspezifischen Inspektionsparameter. Alle diese Informationen werden in einem (ein- und demselben) JobTicket (2) für diesen Druck zusammengeführt.

Die (Rück-) Gewinnung der Inspektionsparameter aus dem JobTicket (2) ermöglicht die automatische Einstellung des Inspektionssystems (10') auf den jeweils zu druckenden Auftrag bzw. auf die einzelnen Instanzen des Druckbildes (15), die mit variablen Inhalten und/oder variablem Layout versehen sein können. Dem Inspektionssystem (10')werden auf diese Weise, d.h. unter Verwendung und Auslesung des JobTickets (2) oder zumindest von Teilen davon, die Inhalte, die Position, die Größe, die Farbe und der Typ des Objektes mitgeteilt. Objekt-Typen sind z.B. Text, Grafiken, Barcodes und 2D-Codes. Dem Inspektionssystem (10') werden nur solche Objekte übermittelt, die gemäß JobTicket (2) als zu prüfen definiert sind. Filter (5) sorgt dabei dafür, dass die relevanten Inspektionsparameter aus den JobTicket (2) extrahiert werden. Ferner sind im JobTicket (2) Attribute enthalten, die das Inspektionssystem veranlassen, entweder auf Identität eines Objektes mit dem Sollwert zu vergleichen oder es wird lediglich überprüft, dass etwas an der betreffenden Stelle gedruckt wurde. Für Barcodes und 2D-Codes werden darüber hinaus noch Qualitätsbeurteilungen durchgeführt. Die variablen Inhalte werden in einer Datenbank (11) bereitgehalten.

Das JobTicket (2) enthält alle Layout-Informationen (z.B. Objekt-Positionen und -Größen, Schriftgröße, Stile, Ausrichtung, etc.), die Druckinhalte bei statischen Daten, Referenzen auf statische Bilder, die Variablennamen bei variablen Inhalten, Definition der Datenquelle bei variablen Daten und eine Identifikation des Substrates.

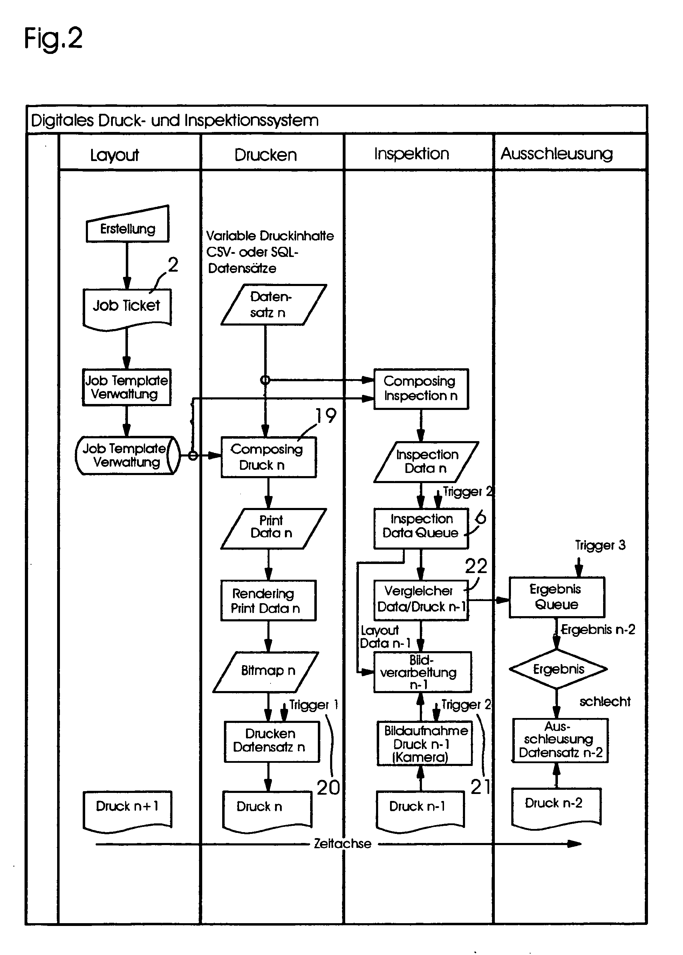

Das JobTicket (2) enthält insbesondere folgende Informationen, die im Rahmen eines so genannten Composing (19, vgl. Figur 2) zusammengefügt werden:
1. Geometrie (Position und Größe) eines zu druckenden Objektes
2. Ausrichtung des Inhalts innerhalb des Objekt-Feldes (Winkel, Justierung)
3. Hintergrund-, Vordergrund- und Rahmenfarbe eines Objektes
4. Type des Objektes (z.B. Text, Bild, Barcode)
5. Bei Text: Font und Schriftgröße
6. Bei Barcode: Barcode-Type
7. Druckinhalt:
   a. Statischer Text (Zeichenketten)
   b. Variabler Text (Referenz auf eine Datenquelle und Feldbezeichner)
   c. Statische Bilder (Pfad auf eine Datei)
   d. Variable Bilder (Referenz auf eine Datenquelle und Feldbezeichner)
   e. Statische Barcodes und 2D-Codes (Zeichenketten)
   f. Variable Barcodes und 2D-Codes (Referenz auf eine Datenquelle und Feldbezeichner)

Nachdem der Druckjob zum Drucken freigegeben wurde (z.B. durch den Bediener), wird das JobTicket (2) gleichzeitig von einer Recheneinheit (3), d. h. über die jeweiligen Instanzen des JobTicket-Parser (3) an den Renderer (4) des Drucksystems (9') und den Filter (5) des Inspektionssystems übermittelt. Alternativ dazu wird das Jobticket (2) zunächst an das Drucksystem (9') gesendet und von dort an das Inspektionssystem (10') oder umgekehrt.

Im Drucksystem (9') sorgt die Rendering-Komponente (4) für die Generierung der Druckdaten (Bitmap-Format) und -parameter (13). Hierbei werden auch die variablen Inhalte für die jeweilige Druckinstanz aus der externen Datenquelle (11) eingelesen und in die statische Hintergrund-Ebene des Druckbildes eingefügt. Die Druckdatenverarbeitung (7) sorgt für die zeitliche und positionsgenaue Übertragung der Instanz des jeweiligen Druckbildes (15) an die Druckeinheit bzw. Druckköpfe (9). Das Drucken der Bitmap wird durch ein Trigger-Signal "Trigger 1" (20, vgl. Figur 2) ausgelöst.

Über einen Filter (5) werden die Inspektions-relevanten Informationen extrahiert, konvertiert und in eine Warteschlange (6) (z.B. einen FiFo-Speicher) eingetragen. Die Reihenfolge der Inspektionsdaten und -parameter (14) in der Warteschlange (6) entspricht genau der Druckreihenfolge. Mit der Inspektionseinheit (10), bzw. Kamera, wird bei Empfang eines Trigger-Signals "Trigger 2" (21, vgl. Figur 2) der Druck (16) aufgenommen und entsprechend des Inhalts des nächsten Inspektionsdatensatzes (14) aus der Warteschlange (6) von der Inspektionseinheit bzw. Inspektionsdatenverarbeitung (8) analysiert. Der Vergleicher (22, vgl. Figur 2) vergleicht dabei objektabhängig (Text: OCR/OCV und Textvergleich; Bilder: Pixelvergleich; Barcode: Barcode dekodieren und Inhalt als Text vergleichen).

Wird von der Inspektionsdatenverarbeitung (8) ein Fehler erkannt (Differenz zwischen aufgenommenem, gedrucktem Bild (16) und Inspektionsdatensatz bzw. Soll-Daten (14)) wird an das Drucksystem ein Signal (17) mit einer detaillierten Fehlermeldung gegeben. Das Drucksystem entscheidet dann je nach eingestellter Verfahrensweise (Policy) eine geeignete Maßnahme. Das kann z.B. eine der folgenden Möglichkeiten sein:
- Ignorieren des Fehlers und Übergabe der Meldung und Identifikation des fehlerhaften Druckes (16) an das übergeordnete Steuerungssystem.
- Ausschleusen oder Markierung des fehlerhaften Druckes (16) und Übergabe der Meldung und Identifikation des fehlerhaften Druckes an das übergeordnete Steuerungssystem.
- Ausschleusen oder Markierung des fehlerhaften Druckes (16) und Wiederholung des Drucks durch erneutes Einfügen des Druckauftrags.
- Anhalten des Drucksystems, Ausschleusen des fehlerhaften Druckes (16) und Wiederholung der Drucke (16) zwischen Druckkopf und Kamera
- Drucksystem anhalten, wenn mehr als n Drucke (16) fehlerhaft sind (z.B. n>2, n>3, n>4, n>5 oder n>10)
- Automatische oder benutzergeführte Durchführung geeigneter Maßnahmen zur Korrektur einer mechanischen Ursache am Druckkopf (9)

Ein Inspektionssystem muss auf die Eigenschaft des jeweiligen Substrats (12) adaptiert werden. Die Parameter hierfür sind in der der Substrat-Datenbank (18) hinterlegt. Eine ID auf das jeweilige Substrat (12) ist im JobTicket (2) enthalten. Die Substrat-Datenbank (18) enthält alle Material-abhängigen Parameter für das Drucksystem und für das Inspektionssystem.

### Figur 2:

Der Ablauf des erfindungsgemäßen Verfahrens ist in die vier Abschnitte "Layout", "Drucken", "Inspektion" und "Ausschleusung" unterteilt.

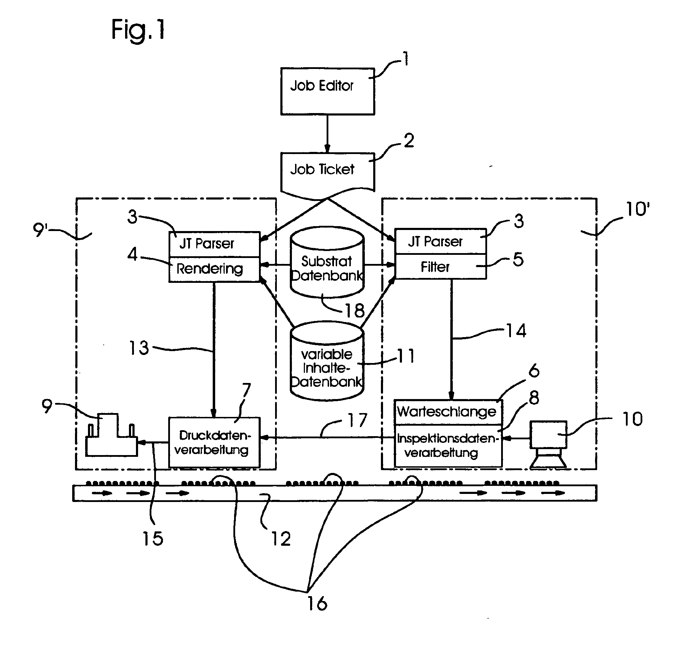

Im erfindungswesentlichen Abschnitt "Inspektion" werden zunächst die Inspektionsdaten ("Inspection Data") aus dem JobTicket (2) extrahiert (vgl. Tätigkeit des Filters 5 in Figur 1) und dann einer Warteschlange (6) ("Inspection Data Queue") zugeführt. In einem Vergleicher (22) werden die extrahierten bzw. herausgefilterten Inspektionsdaten mit den von der Inspektionseinheit (10, vgl. Figur 1) aufgenommenen Bilddaten des entsprechenden Drucks (z.B. Druck n-1) auf vorhandene Fehler verglichen. Da Inspektion und Drucken gleichzeitig ablaufen, werden beim Drucken der Drucke mit Zähler n immer Drucke mit Zähler n-1 (oder n-2, n-3, ...) inspiziert. Da die Inspektion in Echtzeit erfolgen soll, wird bevorzugt der Druck n-1 inspiziert, während der druck n gedruckt wird.

### Bezugszeichenliste

- 1: JobEditor
- 2: JobTicket
- 3: Recheneinheit / JobTicket-Parser
- 4: Renderer
- 5: Filter
- 6: Warteschlange
- 7: Druckdatenverarbeitung
- 8: Inspektionsdatenverarbeitung
- 9: Druckeinheit / Druckkopf
- 9': Drucksystem
- 10: Inspektionseinheit / Kamera
- 10': Inspektionssystem
- 11: Datenbank für variable Inhalte
- 12: Substrat
- 13: Druckdaten und -parameter
- 14: Inspektionsdaten und -parameter (Datensatz)
- 15: Druckbild
- 16: Druck / gedrucktes Bild
- 17: Signal
- 18: Substrat-Datenbank
- 19: Composing
- 20: Triggersignal
- 21: Triggersignal
- 22: Vergleicher

## Patentansprüche

1. Verfahren zur Erzeugung und Inspektion von Drucken mit statischen und variablen Inhalten, wobei
- eine Druckeinheit (9), eine Inspektionseinheit (10) und eine Recheneinheit (3) bereitgestellt werden,
- die Recheneinheit druckspezifische Informationen mit statischen und variablen Inhalten in Form von Druckparametern und Inspektionsparametern in ein gemeinsames JobTicket (2) integriert und das JobTicket (2) i) sowohl an die Druckeinheit als auch an die Inspektionseinheit leitet oder ii) zunächst an die Druckeinheit und von der Druckeinheit an die Inspektionseinheit leitet oder umgekehrt,
- die Druckparameter aus dem gemeinsamen Jobticket (2) extrahiert werden,
- die Druckeinheit unter Verwendung der extrahierten Druckparameter Drucke (16) erstellt,
- die Inspektionsparameter aus dem gemeinsamen Jobticket (2) extrahiert werden,
- die Inspektionseinheit unter Verwendung der extrahierten Inspektionsparameter die Drucke (16) inspiziert.

2. Verfahren nach Anspruch 1,
**dadurch gekennzeichnet,**
**dass** die Inspektionsparameter aus dem gemeinsamen Jobticket (2) unter Einsatz eines Filters extrahiert werden.

3. Verfahren nach Anspruch 1,
**dadurch gekennzeichnet,**
**dass** die Inspektionsparameter einer Warteschlange zugeführt werden.

## Claims

1. Method for creating and inspecting prints with static and variable content, wherein
- a printing unit (9), an inspection unit (10) and a computing unit (3) are provided,
- the computing unit integrates print-specific information with static and variable content in the form of printing parameters and inspection parameters into a common Job Ticket (2) and forwards the Job Ticket (2) i) to both the printing unit and the inspection unit or ii) initially to the printing unit and from the printing unit to the inspection unit or vice versa,
- the printing parameters are extracted from the common Job Ticket (2)
- the printing unit creates prints (16) using the extracted printing parameters,
- the inspection parameters are extracted from the common Job Ticket (2),
- the inspection unit inspects the prints (16) using the extracted inspection parameters.

2. Method according to claim 1,
**characterized in**
**that** the inspection parameters are extracted from the common Job Ticket (2) using a filter.

3. Method according to Claim 1,
**characterized in**
**that** the inspection parameters are fed to a queue.

## Revendications

1. Procédé pour la fabrication et la vérification d'impressions avec des contenus statiques et variables,
- une unité d'impression (9), une unité d'inspection (10), et une unité de calcul (3) étant disponibles,
- l'unité de calcul intégrant des informations spécifiques à l'impression avec des contenus statiques et variables sous forme de paramètres d'impression et de paramètres d'inspection dans un ticket commun de tâche (2) et le ticket de tâche (2) étant transféré aussi bien à l'unité d'impression qu'à l'unité d'inspection ou ii) tout d'abord à l'unité d'impression et de l'unité d'impression à l'unité d'inspection ou inversement,
- les paramètres d'inspection étant extraits du ticket commun de tâche (2),
- l'unité d'impression étant inspectée en utilisant le ticket commun de tâche (2),
- l'unité d'inspection inspectant les impressions (16) en utilisant les paramètres d'inspection extraits.

2. Procédé selon la revendication 1,
**caractérisé en ce que**
les paramètres d'inspection sont extraits du ticket commun de tâche (2) en utilisant un filtre.

3. Procédé selon la revendication 1, **caractérisé en ce que** les paramètres d'inspection sont ajoutés sur une liste d'attente.
